# EUROPÄISCHE PATENTSCHRIFT

(11) **EP 2 033 503 B1**
(45) Veröffentlichungstag und Bekanntmachung des Hinweises auf die Patenterteilung: **19.06.2013**
(21) Anmeldenummer: 08013670.8
(22) Anmeldetag: 30.07.2008
(51) Int. Cl.: A01B 3/42, A01B 3/46

(54) **Aufsattelpflug**
Semi-mounted plough
Charrue semi-portée

(30) Priorität: 10.09.2007 DE 102007042961
(43) Veröffentlichungstag der Anmeldung: 11.03.2009
(73) Patentinhaber: Alois Pöttinger Maschinenfabrik Ges.m.b.H., 4710 Grieskirchen (AT)
(72) Erfinder: Baldinger, Markus, Dr. Dipl.-Ing., 4084 St. Agatha (AT); Aumayr, Klaus, Dipl.-Ing., 4612 Scharten (AT); Baldinger, Friedrich, Ing., 4600 Wels (AT); Hehenberger, Martin, 4070 Eferding (AT)
(74) Vertreter: Thoma, Michael

(56) Entgegenhaltungen:
- WO-A1-2004/032601

## Beschreibung

Die vorliegende Erfindung betrifft einen Aufsattelpflug mit einem über eine Mehrpunktanlenkung mit Ober- und Unterlenkern an einen Schlepper anbaubaren Anbaubock sowie einem Pflugschare tragenden Pflugrahmen, der über ein Fahrwerk am Boden abgestützt und gelenkig am Anbaubock angehängt ist, wobei zwischen dem Pflugrahmen und dem Anbaubock zumindest ein Schwenkgelenk mit einer liegenden Querachse vorgesehen ist, um die der Pflugrahmen gegenüber dem Anbaubock verkippbar ist.

Aufsattelpflüge besitzen in der Regel einen die Pflugschare tragenden Pflugrahmen, der über ein Fahrwerk permanent auf dem Boden abgestützt ist, so dass der Pflug während des Betriebes und auch im Vorgewende mit dem Fahrwerk am Boden bleibt. Damit der Pflug beim Überfahren von Bodenwellen oder Kuppen gegenüber dem Schlepper Ausgleichsbewegungen machen kann, ist der Pflugrahmen regelmäßig um eine liegende Querachse gegenüber dem Anbaubock verwippbar. Dieser Freiheitsgrad zwischen Pflugrahmen und Anbaubock führt jedoch dazu, dass der Pflug nur mit einem Bruchteil seines Eigengewichts auf die Dreipunktanlenkung drückt, da ein beträchtlicher Teil des Pfluggewichts von dessen Fahrwerk am Boden abgestützt wird. Insbesondere bei vielscharigen Pflügen kommt es in Folge der hierfür benötigten Zugkraft oft zu Traktionsproblemen am Schlepper, da dessen Hinterräder nicht stark genug auf den Boden gepresst werden. Es wurde deshalb bereits versucht, die Traktion des Schleppers erhöhende Traktionshilfen vorzusehen, die einen größeren Teil des Pfluggewichts auf den. Schlepper verlagern.

Beispielsweise beschreibt die EP 1731009 A1 ein System zur Traktionserhöhung an Aufsattelpflügen. Dort wird vorgeschlagen, anstelle eines herkömmlichen Oberlenkers einen längenveränderbaren Hydraulikzylinder als Oberlenker zu verwenden, der einerseits die gewünschten Bodenanpassbewegungen zulässt und durch Längenveränderung ausgleicht. Dieser den Oberlenker bildende Hydraulikzylinder wird über eine Drucksteuervorrichtung vorgespannt, um den Aufsattelpflug gewichtsmäßig zu entlasten und entsprechendes Gewicht zusätzlich auf die Antriebsräder des Schleppers zu geben. Bei einem derartigen, druckgeregelten Traktionserhöhungssystem ist jedoch die Abstimmung zwischen Schlepper und Anbaupflug problematisch, da die Druckregelung für den hydraulischen Oberlenker exakt auf den jeweiligen Aufsattelpflug abzustimmen ist, was die Schlepperhersteller vor nicht unerhebliche Probleme stellt, da selbstverständlich ein bestimmter Schleppertyp von verschiedenen Betreibern mit unterschiedlichen Anbaupflügen gekoppelt wird. Zudem sind bereits vorhandene Schlepper, die in Betrieben durchaus einige Jahre alt sein können, nicht ohne weiteres in der gewünschten Weise nachrüstbar, um eine solche Zugkraftregelung im Oberlenker für einen Aufsattelpflug bereit stellen zu können.

Aus der WO 2004/032601 A1 ist ein Aufsattelpflug bekannt, bei dem der Anbaubock relativ zum Pflugrahmen um eine liegende Querachse verkippbar ist und durch einen Druckmittelzylinder vorgespannt ist, wobei die Vorspannung derart beschaffen sein soll, dass der Pflugrahmen gegenüber dem Anbaubock zusätzlich zu seinem Eigengewicht nach unten auf den Boden gedrückt wird, um einen Teil des Gewichts auf die Vorderachse des Schleppers zu geben.

Der vorliegenden Erfindung liegt hiervon ausgehend die Aufgabe zugrunde, einen verbesserten Aufsattelpflug der eingangs genannten Art zu schaffen, der die Nachteile des Standes der Technik vermeidet und Letzteren in vorteilhafter Weise weiterbildet. Insbesondere soll der Aufsattelpflug mit einfachen Mitteln eine Traktionserhöhung am Schlepper ermöglichen, ohne eine bestimmte Ausbildung der Schlepperhydraulik zu bedingen.

Erfindungsgemäß wird diese Aufgabe durch einen Anbaupflug gemäß Anspruch 1 gelöst. Bevorzugte Ausgestaltungen der Erfindung sind Gegenstand der abhängigen Ansprüche.

Es wird vorgeschlagen, eine Vorspannvorrichtung zur Gewichtsentlastung des Pflugs und Gewichtsbelastung der Hinterräder des Schleppers pflugseitig vorzusehen und in die Anlenkung des Pflugrahmens am Anbaubock zu integrieren, so dass ein hydraulisch vorspannbarer Oberlenker und eine Drucksteuerung vom Schlepper her nicht notwendig ist, gleichwohl jedoch möglich wäre. Vorteilhafterweise wird dabei die liegende Querachse, um die der Pflugrahmen gegenüber dem Anbaubock Wippbewegungen ausführen kann, rotatorisch vorgespannt, so dass ein Teil des Pfluggewichts auf die Hinterräder des Schleppers übertragen wird. Erfindungsgemäß ist zwischen dem Pflugrahmen und dem Anbaubock eine Vorspannvorrichtung zur elastischen Vorspannung des Pflugrahmens gegenüber dem Anbaubock um die genannte liegende Querachse vorgesehen, wobei die Vorspannvorrichtung derart angeordnet und ausgebildet ist, dass die von der Vorspannvorrichtung aufgebrachte Vorspannkraft den Pflugrahmen entgegen seiner Gewichtskraft entlastet und gegenüber dem Anbaubock vom Boden Weg nach oben zu ziehen oder drücken versucht.

Durch die rotatorische Vorspannung der liegenden Querachse zwischen Pflugrahmen und Anbaubock wird im Arbeitsbetrieb des Pflugs permanent eine Gewichtsübertragung vom Pflug auf die Hinterräder des Schleppers und damit eine Traktionserhöhung bewirkt. Die Vorspannkraft, die im Pflugbetrieb das hintere Pflugende sozusagen leicht anzuheben versucht, bewirkt über die Mehrpunktanlenkung am Schlepper eine Reaktionskraft, die dessen Antriebsräder nach unten drückt, wodurch sich die Traktion erhöht. Dies bringt neben einer generellen Zugkraft- und Leistungserhöhung eine bessere Schlepperauslastung mit sich. Der Schlupf wird verringert, wodurch Treibstoff gespart und der Boden geschont wird. Durch die Integration der Vorspannvorrichtung in den Pflug kann die Traktionserhöhung am Schlepper unabhängig von dessen Ausbildung erreicht werden. Der Schlepper selbst braucht nicht in spezieller Weise an den Pflug adaptiert zu werden. Insbesondere können auch ältere Schleppermodelle mit herkömmlichen Oberlenkern, die nicht hydraulisch vorspannbar sind, hinsichtlich Traktion und Zugkraft verbessert werden.

Die Anlenkung des Pflugrahmens am Anbaubock kann dabei grundsätzlich verschieden ausgebildet sein. Beispielsweise kann der Pflugrahmen mit seinem vorderen Ende unmittelbar am Anbaubock oder einem daran gelagerten Anlenkstück um die liegende Querachse wippbar angelenkt sein. In Weiterbildung der Erfindung kann der Aufsattelpflug jedoch vorteilhafterweise auch als Onlandaufsattelpflug ausgebildet sein. Zwischen dem Anbaubock und dem Pflugrahmen kann eine Deichsel vorgesehen sein, die mit ihrem vorderen Ende um eine aufrechte Zugpunktachse schwenkbar an dem Anbaubock angelenkt ist und an ihrem hinteren Ende um eine ebenfalls aufrechte Furchenbreiten-Einstellachse schwenkbar mit dem Pflugrahmen verbunden ist, wobei zwischen Pflugrahmen und Deichsel eine Arretiervorrichtung vorgesehen ist, die den Pflugrahmen in einer jeweils gewählten Winkelstellung zur Deichsel fixiert. Gegenüber dem Anbaubock ist die Deichsel mit ihrem vorderen Ende zusätzlich um eine liegende Querachse wippbar angelenkt, wobei hierzu vorteilhafterweise das vordere Ende der Deichsel an dem genannten Anlenkstück wippbar gelagert ist, das selbst um die aufrechte Zugpunktachse schwenkbar am Anbaubock befestigt ist. Das genannte Anlenkstück kann hierbei derart ausgebildet sein, dass sich die aufrechte Zugpunktachse und die liegende Wippachse schneiden, wobei jedoch auch zueinander versetzte Schwenkachsen vorgesehen sein können.

Um die zuvor genannte Vorspannkraft zu erzeugen, kann die Vorspannvorrichtung von der genannten liegenden Wippachse beabstandet einerseits an der Deichsel und andererseits an dem schwenkbaren Anlenkstück angreifen, wobei ggf. jedoch auch eine Anlenkung am Anbaubock selbst möglich ist, beispielsweise über ein Kardangelenk bzw. ein Kugelgelenk, das beide Schwenkbewegungen der Deichsel gegenüber dem Anbaubock zulässt. Die Vorspannvorrichtung ist dabei derartig ausgebildet, dass sie versucht, die Deichsel gegenüber dem Anbaubock vom Boden weg nach oben zu drücken bzw. zu ziehen, so dass als Reaktionskraft im Oberlenker der Mehrpunktanlenkung eine Zugkraft induziert wird, die wiederum eine zusätzliche Aufstandskraft an den Hinterrädern des Schleppers bewirkt.

Alternativ oder zusätzlich zu einer liegenden Wippachse am vorderen Ende der Deichsel kann eine solche liegende Wippachse auch zwischen dem Pflugrahmen und der Deichsel vorgesehen und/oder ggf. auch in die Deichsel integriert sein. In diesem Fall ist vorteilhafterweise eine Vorspannvorrichtung vorgesehen, die einerseits an der Deichsel und andererseits an dem Pflugrahmen angreift, um den Pflugrahmen gegenüber der Deichsel nach oben zu drücken bzw. zu ziehen, so dass ebenfalls in der Mehrpunktanlenkung und an den Hinterrädern des Schleppers die zuvor genannten Reaktionskräfte erzeugt werden.

Die Vorspannvorrichtung kann grundsätzlich verschieden ausgebildet und angeordnet sein, beispielsweise kann eine mechanische Feder als Vorspannvorrichtung Verwendung finden. In bevorzugter Weiterbildung der Erfindung jedoch umfasst die Vorspannvorrichtung einen Druckmittelzylinder, der von einer Fluiddruckquelle druckbeaufschlagt und hierdurch vorgespannt ist. Um eine besonders Platz sparende Anordnung zu erreichen, kann der Druckmittelzylinder in einer im Wesentlichen liegenden Ausrichtung und/oder im Wesentlichen parallel zu einer Hauptachse der Deichsel und/oder des vorzugsweise trägerförmigen Pflugrahmens angeordnet sein. Hierbei kann die Deichsel einen buckelförmig vorspringenden Befestigungsabschnitt aufweisen, an dem der Druckmittelzylinder abgestützt ist, so daß sich der Druckmittelzylinder im wesentlichen entlang der Deichsel erstrecken kann.

Um die Traktionskraft je nach Bodenbeschaffenheit und/oder Pflugabstimmung an die Gegebenheiten anpassen zu können, ist in Weiterbildung der Erfindung eine Einstellvorrichtung zur Einstellung der zwischen dem Anbaubock und dem beweglich gelagerten Anlenkpunkt wirkenden Vorspannkraft vorgesehen. Wird die Vorspannvorrichtung von einer mechanischen Feder gebildet, kann beispielsweise eine Federstellschraube in einfachster Ausführung einer solchen Einstellvorrichtung vorgesehen sein. Insbesondere ist jedoch in Weiterbildung der Erfindung eine Hydraulikdruck-Einstellvorrichtung, insbesondere ein Hydraulikdruckregler vorgesehen, mit Hilfe dessen der auf den Vorspannzylinder wirkende Hydraulikdruck gesteuert werden kann.

In einfacher Ausführung der Erfindung kann die Einstellvorrichtung dabei manuell betätigbar sein dahingehend, dass eine gewünschte Vorspannkraft einstellbar ist, mit der der Pflugrahmen nach oben gespannt wird. Gemäß einer bevorzugten, höher entwickelten Ausführung kann die Einstellvorrichtung auch automatisch arbeitend ausgebildet sein, insbesondere derart, dass sie eine Steuereinrichtung zur Veränderung der Vorspannkraft in Abhängigkeit eines Antriebsradschlupfes des Schleppers und/oder in Abhängigkeit eines den Antriebsradschlupf beeinflussenden Betriebsparameters aufweist.

Die Steuereinrichtung kann hierbei grundsätzlich verschieden ausgebildet sein. Nach einer vorteilhaften Ausführung kann die Steuereinrichtung hydraulisch ausgebildet sein, insbesondere einen Druckspeicher sowie zwischen Druckspeicher und Druckmittelzylinder angeordnete Drucksteuer- und/oder -regelventile besitzen, die in Abhängigkeit relevanter Betriebsparameter ansteuerbar sind. Alternativ kann die Steuervorrichtung auch elektronisch arbeitend ausgebildet sein, wobei sie hierzu vorteilhafterweise Erfassungsmittel beispielsweise in Form eines Sensors zur Erfassung des genannten Betriebsparameters, der den Antriebsradschlupf beeinflußt, umfaßt, wobei die Erfassungsmittel auch direkt Radschlupf-Erfassungsmittel sein können, die direkt den Radschlupf der Antriebsräder des Schleppers erfassen, beispielsweise durch Differenzbildung zwischen Fahrgeschwindigkeit und Radumfangsgeschwindigkeit. Alternativ oder zusätzlich können auch den Radschlupf beeinflussende Betriebsparameter wie zusätzliche Radbelastung und/oder Pfluggewichtsentlastung erfasst werden. Beispielsweise kann die Zugkraft im Oberlenker bestimmt werden und/oder die Vorspannkraft im Vorspannzylinder. Die Steuereinrichtung regelt daraufhin den Hydraulikdruck für den Vorspannzylinder derart, dass sich ein minimaler Radschlupf ergibt. Insbesondere kann die genannte Steuereinrichtung Steuermittel aufweisen, die die Vorspannkraft mit zunehmendem Radschlupf am Schlepper und/oder mit zunehmender Pflugzugkraft erhöhen, um den zunehmenden Radschlupf bzw. die zunehmende Pflugzugkraft durch eine entsprechende Traktionserhöhung zu kompensieren. Die genannten Steuermittel können beispielsweise einen Regler zu Regelung des Radschlupfs durch Einstellung der Vorspannkraft aufweisen. Die Steuervorrichtung kann hierbei einen Steuerrechner umfasen, der die gewünschte Steuer- und/oder Regelfunktion verwirklicht.

Die Steuervorrichtung kann weiterhin in vorteilhafterweise auch mit dem Schlepper kommunizieren, beispielsweise über ein ISO-Bussystem, um relevante Betriebsparameter vom Schlepper abzufragen, beispielsweise Antriebsschlupfdaten, in Abhängigkeit derer dann die Vorspannkraft verändert wird.

Die vorliegende Erfindung wird nachfolgend anhand bevorzugter Ausführungsbeispiele und zugehöriger Zeichnungen näher erläutert. In den Zeichnungen zeigen:
- Fig. 1: Eine schematische Seitenansicht eines an einen Schlepper angebauten Aufsattelfplugs nach einer vorteilhaften Ausführung der Erfindung,
- Fig. 2: eine Draufsicht auf den Aufsattelpflug aus Fig. 1, und
- Fig. 3: eine vergrößerte Seitenansicht des Anlenkbereiches des Aufsattelpfluges aus den vorhergehenden Figuren, die die Vorspannvorrichtung zwischen dem Anbaubock und der Deichsel des Aufsattelpfluges zeigt.

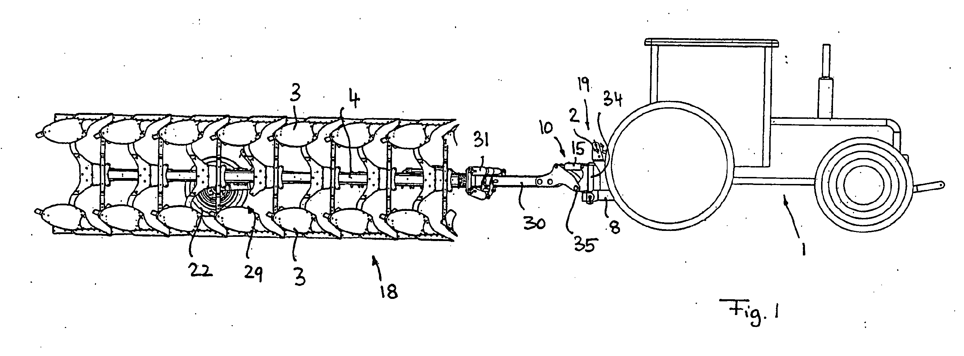

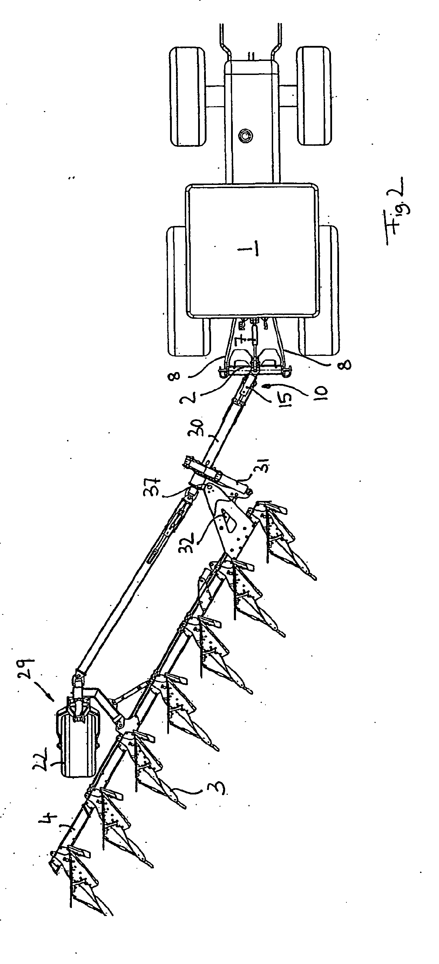

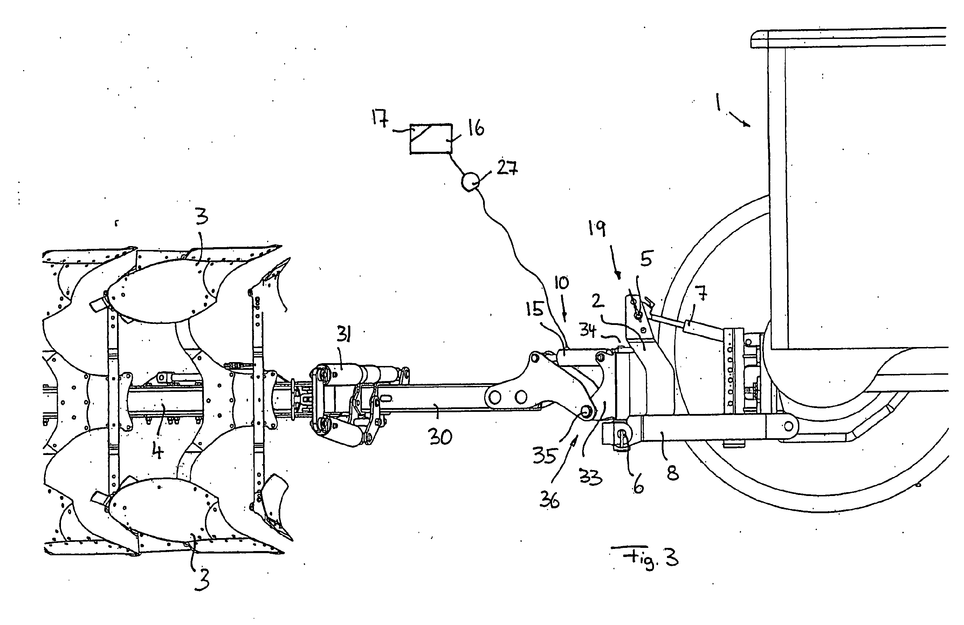

Der in Fig. 1 gezeigte Anbaupflug 18 ist mittels einer Dreipunktanlenkung 19 umfassend den Oberlenker 7 und zwei Unterlenker 8 an den Schlepper 1 angebaut, der den Aufsattelpflug 18 zieht. Wie die vergrößerte Darstellung Z der Fig. 1 zeigt, die ausschnittsweise den Anbaubereich des Aufsattelpflugs 18 vergrößert darstellt, umfasst der Aufsattelpflug 18 einen Anbaubock 2, der in Form eines Blechprofilrahmens bzw. -gestells ausgebildet sein kann und im Wesentlichen eine aufrechte Hauptachse besitzt. Der Anbaubock 2 umfasst zwei seitliche, voneinander beabstandete Unterlenkeranlenkpunkte 6, die am unteren Ende des Anbaubocks 2 angeordnet sind, sowie einen zentralen, mittig angeordneten Oberlenkeranlenkpunkt 5, der im Bereich des oberen Endes des Anbaubocks 2 an diesem angreift, vgl. Fig. 2 und 3. An den genannten Anlenkpunkten 5 und 6 greifen der Oberlenker 7 sowie die beiden Unterlenker 8 des Schleppers 1 an, die mit den genannten Anlenkpunkten 5 und 6 gelenkig bzw. schwenkbar um liegende Querachsen verbunden sind.

Der Aufsattelpflug 18 umfasst des Weiteren einen Pflugrahmen 4, der zwei Reihen von Pflugscharen 3 trägt, die auf gegenüber liegenden Seiten des Pflugrahmens 4 angeordnet sind. Der genannte Pflugrahmen 4 ist dabei einerseits an einem Fahrwerk 29 umfassend ein Stützrad 22 am Boden abgestützt, wobei das genannte Fahrwerk 29 den als geraden Träger ausgebildeten Pflugrahmen 4 etwa - grob gesprochen - mittig bzw. von der Mitte ein Stück weit zum hinteren Ende versetzt abstützt. Bei der in Fig. 2 gezeigten siebenscharigen Ausführung greift das Fahrwerk 29 etwa an der fünften Schar an, vgl. Fig. 2. Andererseits ist der Pflugrahmen 4 mit einem vorderen Abschnitt an einer Deichsel 30 angelenkt, die wiederum an dem am Schlepper angebauten Anbaubock 2 angelenkt ist. Der Pflugrahmen 4 ist hierbei um eine Wendeachse 20, die im Wesentlichen mit der Längsachse der Deichsel 30 zusammenfällt bzw. sich zu dieser parallel erstreckt, um die Deichsel 30 schwenkbar, so dass der Pflugrahmen 4 wahlweise mit der einen Reihe von Pflugscharen 3 oder der anderen Reihen von Pflugscharen 3 zum Einsatz kommt. Beim Wenden wird hierbei der Pflug über die Deichsel 30 und auch über das Fahrwerk 29 hinweg auf die andere Seite geschwenkt, wobei das Fahrwerk 29 am Boden abgestützt bleibt. Als Wendeantrieb dient in der gezeichneten Ausführung ein Hydraulikzylinder 31.

Weiterhin ist der Pflugrahmen 4 gegenüber der Deichsel 30 um eine aufrechte Furchenbreiten-Einstellachse 37 schwenkbar, vgl. Fig. 2, so dass der in Draufsicht betrachtete Knickwinkel zwischen Deichsel 30 und Pflugrahmen 4 verändert und in der verschiedenen Stellungen arretiert werden kann. Hierzu ist in der gezeichneten Ausführunsform als Stellantrieb wiederum ein Furchenbreiten-Druckmittelzylinder 32 vorgesehen, vgl. Fig. 2. Im übrigen ist der Pflugrahmen 4 mit der Deichsel 30 starr verbunden, insbesondere ist im Pflugbetrieb kein Wippen bzw. Kippen zwischen Deichsel 30 und Pflugrahmen 4 vorgesehen.

Wie Fig. 2 zeigt, ist des Weiteren das Fahrwerk 29 über eine Gelenkstange am Deichselende angelenkt, vgl. Fig. 2.

Die Deichsel 30 ist, wie dies Fig. 3 am besten zeigt, an ihrem vorderen Ende mittels eines Schwenkgelenks 36 mehrachsig gelenkig an dem Anbaubock 2 angelenkt. In der gezeichneten Ausführung ist dabei die Deichsel 30 selbst um eine liegende Wippachse an einem Anlenkstück 33 schwenkbar angelenkt, das wiederum um eine aufrechte Zugpunktachse 34 schwenkbar an dem Anbaubock 2 schwenkbar gelagert ist. Je nachdem, wie sich das Anlenkstück 33 und die damit verbundene Deichsel 30 um die aufrechte Zugpunktachse 34 ausrichtet, dreht sich auch die zuvor genannte liegende Wippachse 35 mit, so daß diese nicht immer streng quer zur Fahrrichtung verläuft, jedoch in einer liegenden Ausrichtung verbleibt, um Wippbewegungen des Pflugrahmens 4 gegenüber dem Anbaubock 2 zuzulassen.

Wie Fig. 3 zeigt, ist die Deichsel 30 mittels einer Vorspannvorrichtung 10 an dem genannten Anlenkstück 33 und damit am Anbaubock 2 bezüglich der liegenden Wippachse 35 rotatorisch vorgespannt, wobei die Vorspannvorrichtung 10 versucht, die Deichsel 30 vom Boden weg nach oben zu drücken bzw. zu ziehen. In der gezeichneten Ausführung umfasst die Vorspannvorrichtung 10 dabei einen Druckmittelzylinder 15, der einerseits an dem zuvor genannten Anlenkstück 33 und andererseits an der Deichsel 30 jeweils im Abstand von der liegenden Wippachse 35 angreift. In der gezeichneten Ausführung ist dabei der Druckmittelzylinder 15 oberhalb der Wippachse 35 angeordnet, so dass er in seine verkürzende Stellung vorgespannt ist, um die Deichsel 30 nach oben vorzuspannen. Vorteilhafterweise erstreckt sich der genannte Druckmittelzylinder 15 in im Wesentlichen liegender Ausrichtung parallel zur Deichsel 30 leicht oberhalb derselben, wodurch eine insgesamt kompakte, klein bauende Ausführung erreicht wird.

Durch den genannten Druckmittelzylinder 15 ist der Oberlenkeranlenkpunkt 5 des Aufsattelpflugs 18 derart vorspannbar, dass im Pflugbetrieb permanent eine vorbestimmte Zugkraft im Oberlenker 7 induziert werden kann, die einerseits das Heck des Aufsattelpflugs 18 und das dort vorgesehene Stützrad 22 entlastet und umgekehrt - über die in den Unterlenkern wirkenden Gegenkräfte - am Schlepper 1 eine Reaktionskraft bewirkt, die die Antriebsräder des Schleppers 1 zusätzlich belastet und hierdurch die Traktion erhöht. Gemäß der in Fig. 2 gezeichneten Ausführungsform ist dabei der Druckmittelzylinder 15 in seine ausfahrende Stellung vorgespannt, so dass die in Fig. 2 zu sehende Lagerwippe 11 rotatorisch mit der Uhr vorgespannt ist, d.h. der Oberlenkeranlenkpunkt 5 ist von dem Oberlenker 7 weg vorgespannt.

Um den gewünschten Vorspanndruck im Druckmittelzylinder 15 bereit zu stellen, ist die entsprechende Druckmittelkammer des Druckmittelzylinders 15 mit einem Druckspeicher 27 verbindbar, der extern am Aufsattelpflug 18 vorgesehen, jedoch vorteilhafterweise auch in den Druckmittelzylinder 15 integriert sein kann. Beispielsweise kann ein Membranspeicher vorgesehen sein. Um den Druck und damit die Traktionserhöhung steuern zu können, ist dem Druckspeicher 27 eine Drucksteuervorrichtung 28 zugeordnet, die beispielsweise einen Druckregler umfassen kann. Vorteilhafterweise kann der Druckspeicher 27 auch mit einer Hydraulikleitung an die Schlepperhydraulik angeschlossen werden, so dass vom Schlepper der vom Druckspeicher 27 zur Verfügung gestellte Druck verändert werden kann. Vorteilhafterweise kann vorgesehen sein, den Vorspanndruck dynamisch in Abhängigkeit eines am Schlepper 1 auftretenden Schlupf gesteuert werden, wozu über einen in der Zeichnung nicht eigens dargestellte Erfassungseinrichtung der Schlupf oder eine diesen repräsentativ wiedergebende Betriebsgröße erfaßt wird.

## Patentansprüche

1. Aufsattelpflug mit einem Anbaubock (2), der Ober- und Unterlenkeranlenkpunkte (5, 6) für Ober- und Unterlenker (7, 8) einer Mehrpunktanlenkung zum Anbau an einem Schlepper (1) aufweist, sowie mit einem Pflugschare (3) tragenden Pflugrahmen (4), der über ein Fahrwerk (29) am Boden abgestützt und gelenkig am Anbaubock (2) angehängt ist, wobei zwischen dem Pflugrahmen (4) und dem Anbaubock (2) zumindest ein Schwenkgelenk (36) mit einer liegenden Schwenkachse (35) vorgesehen ist, um die der Pflugrahmen (4) gegenüber dem Anbaubock (2) verkippbar ist, wobei zwischen dem Pflugrahmen (4) und dem Anbaubock (2) eine Vorspannvorrichtung (10) zur elastischen Vorspannung des Pflugrahmens (4) gegenüber dem Anbaubock (2) um die genannte liegende Querachse (35) vorgesehen ist, **dadurch gekennzeichnet, dass** die Vorspannvorrichtung (10) derart angeordnet und ausgebildet ist, dass die von der Vorspannvorrichtung (10) bereit gestellte Vorspannkraft den Pflugrahmen (4) entgegen seiner Gewichtskraft entlastet und gegenüber dem Anbaubock (2) vom Boden weg nach oben zu ziehen oder drücken versucht.

2. Aufsattelpflug nach dem vorhergehenden Anspruch, wobei zwischen dem Pflugrahmen (4) und dem Anbaubock (2) eine Deichsel (30) vorgesehen ist, die am Anbaubock (2) um eine aufrechte Zugpunktachse (34) schwenkbar angelenkt ist und mit dem Pflugrahmen (4) um eine aufrechte Furchenbreiten-Einstellachse (37) schwenkbar verbunden und in verschiedenen Winkelstellungen verriegelbar ist.

3. Aufsattelpflug nach dem vorhergehenden Anspruch, wobei die zumindest eine liegende Querachse (35) zwischen der Deichsel (30) und dem Anbaubock (2) vorgesehen ist und die Vorspannvorrichtung (10) die Deichsel (30) gegenüber dem Anbaubock (2) vorspannt.

4. Aufsattelpflug nach Anspruch 2 oder 3, wobei die zumindest eine oder eine weitere liegende Querachse zwischen der Deichsel (30) und dem Pflugrahmen (4) vorgesehen ist und die Vorspannvorrichtung (10) die Deichsel (30) gegenüber dem Pflugrahmen (4) rotatorisch vorspannt.

5. Aufsattlelpflug nach einem der vorhergehenden Ansprüche, wobei an dem Anbaubock (2) ein Anlenkstück (33) um die aufrechte Zugpunktachse (34) schwenkbar angelenkt ist, an dem die Deichsel (30) um die liegende Querachse (35) wippbar angelenkt ist, wobei die Vorspannvorrichtung (10) einerseits an dem genannten Anlenkstück (33) befestigt und andererseits an der Deichsel (30) befestigt ist.

6. Aufsattelpflug nach einem der vorhergehenden Ansprüche, wobei die Vorspannvorrichtung (10) einen Druckmittelzylinder (15) zur Erzeugung der Vorspannkraft umfasst.

7. Aufsattelpflug nach einem der vorhergehenden Ansprüche, wobei eine Einstellvorrichtung (16) zur Einstellung der zwischen dem Anbaubock (2) und dem wippbar gelagerten Pflugrahmen (4) wirkenden Vorspannkraft vorgesehen ist.

8. Aufsattelpflug nach dem vorhergehenden Anspruch, wobei die Einstellvorrichtung (16) eine Steuereinrichtung (17) zur Veränderung der Vorspannkraft in Abhängigkeit eines Antriebsradsschlupfs des Schleppers (1) und/oder eines den Antriebsradschlupf beeinflussenden Betriebsparameters aufweist.

9. Aufsattelpflug nach dem vorhergehenden Anspruch, wobei die Einstellvorrichtung mit der Steuereinrichtung (17) verbundene Erfassungsmittel zur Erfassung des Radschlupfs und/oder des den Radschlupf beeinflussenden Betriebsparameters aufweist.

10. Aufsattelpflug nach einem der beiden vorhergehenden Ansprüche, wobei die Steuereinrichtung (17) Steuermittel zur Erhöhung der Vorspannkraft mit zunehmendem Radschlupf am Schlepper und/oder zunehmender Pflugzugkraft aufweist.

11. Aufsattelpflug nach dem vorhergehenden Anspruch, wobei die Steuermittel einen Regler zur Regelung des Radschlupfs durch Einstellen der Vorspannkraft aufweisen.

## Claims

1. A semi-mounted plough with a headstock (2) which includes upper and lower link articulation points (5, 6) for the upper and lower links (7, 8) of a multipoint articulation for attachment to a tractor (1), and with a plough frame (4) carrying ploughshares (3), which via a traveling gear (29) is supported on the ground and pivotally attached to the headstock (2), wherein between the plough frame (4) and the headstock (2) at least one swivel joint (36) with a horizontal swivel axis (35) is provided, about which the plough frame (4) is tiltable with respect to the headstock (2), wherein between the plough frame (4) and the headstock (2) a biasing device (10) is provided for elastically biasing the plough frame (4) with respect to the headstock (2) about said horizontal transverse axis (35), **characterized in that** the biasing device (10) is arranged and formed such that the biasing force provided by the biasing device (10) relieves the plough frame against its weight force and tries to pull or urge the same upwards away from the ground with respect to the headstock (2).

2. The semi-mounted plough according to the preceding claim, wherein between the plough frame (4) and the headstock (2) a drawbar (30) is provided, which is pivotally articulated to the headstock (2) about an upright pull point axis (34) and is pivotally connected with the plough frame (4) about an upright furrow width adjustment axis (37) and is lockable in various angular positions.

3. The semi-mounted plough according to the preceding claim, wherein the at least one horizontal transverse axis (35) is provided between the drawbar (30) and the headstock (2) and the biasing device (10) biases the drawbar (30) with respect to the headstock (2).

4. The semi-mounted plough according to claim 2 or 3, wherein the at least one or one more horizontal transverse axis is provided between the drawbar (30) and the plough frame (4) and the biasing device (10) rotatorily biases the drawbar (30) with respect to the plough frame (4).

5. The semi-mounted plough according to any of the preceding claims, wherein to the headstock (2) an articulation piece (33) is pivotally articulated about the upright pull point axis (34), to which the drawbar (30) is luffably articulated about the horizontal transverse axis (35), wherein the biasing device (10) on the one hand is attached to said articulation piece (33) and on the other hand is attached to the drawbar (30).

6. The semi-mounted plough according to any of the preceding claims, wherein the biasing device (10) comprises a pressure-medium cylinder (15) for producing the biasing force.

7. The semi-mounted plough according to any of the preceding claims, wherein an adjusting device (16) is provided for adjusting the biasing force acting between the headstock (2) and the luffably mounted plough frame (4).

8. The semi-mounted plough according to the preceding claim, wherein the adjusting device (16) includes a control means (17) for varying the biasing force in dependence on a drive-wheel slip of the tractor (1) and/or an operating parameter influencing the drive-wheel slip.

9. The semi-mounted plough according to the preceding claim, wherein the adjusting device includes detection means connected with the control means (17) for detecting the wheel slip and/or the operating parameter influencing the wheel slip.

10. The semi-mounted plough according to any of the two preceding claims, wherein the control means (17) includes control means for increasing the biasing force with increasing wheel slip at the tractor and/or increasing plough traction.

11. The semi-mounted plough according to the preceding claim, wherein the control means include a controller for controlling the wheel slip by adjusting the biasing force.

## Revendications

1. Charrue semi-portée avec un support de montage (2) qui comprend des points d'articulation de bielle supérieure et inférieure (5, 6) pour une bielle supérieure et une bielle inférieure (7, 8) d'une articulation multi-points pour le montage sur un tracteur (1), ainsi qu'un châssis de charrue (4) supportant un soc de charrue (3), appuyé sur le sol à l'aide d'un train de roulement (29) et suspendu de manière articulé au niveau du support de montage (2), au moins une articulation pivotante (36) avec un axe pivotant horizontal (35) étant prévu entre le châssis de charrue (4) et le support de montage (2), autour de laquelle le châssis de charrue (4) peut être basculé par rapport au support de montage (2), un dispositif de précontrainte (10) étant prévu entre le châssis de charrue (4) et le support de montage (2), pour la précontrainte élastique du châssis de charrue (4) par rapport au support de montage (2) autour de l'axe transversal horizontal (35) mentionné, **caractérisée en ce que** le dispositif de précontrainte (10) est disposé et conçu de façon à ce que la force de précontrainte exercée par le dispositif de précontrainte (10) décharge le châssis de charrue (4) de sa force de gravité et tend à le tirer vers le haut en l'éloignant du sol ou à le pousser par rapport au support de montage (2).

2. Charrue semi-portée selon la revendication précédente, un timon (30) étant prévu entre le châssis de charrue (4) et le support de montage (2), qui est articulé de manière pivotante au niveau du support de montage (2) autour d'un axe de point de traction vertical (34) et relié de manière articulé avec le châssis de charrue (4) autour d'un axe de réglage de la largeur du sillon vertical (37) et verrouillable dans différentes positions angulaires.

3. Charrue semi-portée selon la revendication précédente, l'au moins un axe transversal horizontal (35) étant disposé entre le timon (30) et le support de montage (2) et le dispositif de précontrainte (10) précontraignant le timon (30) par rapport au support de montage (2).

4. Charrue semi-portée selon la revendication 2 ou 3, d'au moins un ou un autre axe transversal horizontal étant disposé entre le timon (30) et le châssis de charrue (4) et le dispositif de précontrainte (10) précontraignant le timon (30) par rapport au châssis de charrue (4) de manière rotative.

5. Charrue semi-portée selon l'une des revendications précédentes, un élément d'articulation (33) étant articulé de manière pivotante autour de l'axe de point de traction vertical (34) au niveau du support de montage (2), le timon (30) étant articulé de manière basculante au niveau de cet élément autour de l'axe transversal horizontal (35), le dispositif de précontrainte (10) étant fixé d'une part à l'élément d'articulation (33) mentionné et d'autre part au timon (30).

6. Charrue semi-portée selon l'une des revendications précédentes, le dispositif de précontrainte (10) comprenant un vérin à fluide sous pression (15) pour l'application de la force de précontrainte.

7. Charrue semi-portée selon l'une des revendications précédentes, un dispositif de réglage (16) étant prévu pour le réglage de la force de précontrainte exercée entre le support de montage (2) et le châssis de charrue (4) logé de manière basculante.

8. Charrue semi-portée selon l'une des revendications précédentes, le dispositif de réglage (16) comprenant un dispositif de commande (17) pour la modification de la force de précontrainte en fonction d'un patinage des roues motrices du tracteur (1) et/ou d'un paramètre de fonctionnement influençant le patinage des roues motrices.

9. Charrue semi-portée selon la revendication précédente, le dispositif de réglage comprenant des moyens de mesure reliés au dispositif de commande (17) pour la mesure du patinage des roues et/ou du paramètre de fonctionnement influençant le patinage des roues.

10. Charrue semi-portée selon l'une des deux revendications précédentes, le dispositif de commande (17) comprenant des moyens de commande pour l'augmentation de la force de précontrainte lorsque le patinage des roues augmente au niveau du tracteur et/ou lorsque la force de traction de la charrue augmente.

11. Charrue semi-portée selon la revendication précédente, les moyens de commande comprenant un régulateur pour la régulation du patinage des roues grâce au réglage de la force de précontrainte.
